# EUROPEAN PATENT APPLICATION

(11) **EP 4 530 973 A1**
(43) Date of publication of application: **02.04.2025**
(21) Application number: 23199839.4
(22) Date of filing: 26.09.2023
(51) Int. Cl.: G06T 7/00, G06T 5/77

(54) **CATHETER AND DEVICE IDENTIFICATION TO EASE CHEST RADIOGRAPH REVIEW**

(71) Applicant: Koninklijke Philips N.V., 5656 AG Eindhoven (NL)
(72) Inventor: SOUBHIK, Paul, Eindhoven (NL); CHAKRABARTI, Biswaroop, Eindhoven (NL); CHAUDHURY, Sudipta, 5656AG Eindhoven (NL); GOOßEN, Andre, Eindhoven (NL)
(74) Representative: Philips Intellectual Property & Standards

(57) **Abstract**

The present invention relates to a computer-implemented method of determining an impairment of a medical image by a medical device. The method comprises receiving a medical image of a region of interest of a subject, the region of interest comprising at least an anatomical structure and a medical device arranged at the subject, segmenting the medical device in the medical image, and classifying the segmented medical device at least as being a medical device internal or external to the subject. The method comprises further segmenting the anatomical structure in the medical image, and determining an overlapping region of the medical device with the anatomical structure in the medical image. The method comprises further classifying the determined overlapping region as impairing the medical image in case the overlapping region obscures at least a part of the anatomical structure that is relevant for diagnosis of the subject based on the medical image and data related to the subject, and providing an indication of the overlapping region classified as impairing the medical image as output of the method.

## Description

### FIELD OF THE INVENTION

The present invention relates to a computer-implemented method of determining an impairment of a medical image by a medical device, a data processing apparatus, a computer program, and a computer-readable storage medium.

### BACKGROUND OF THE INVENTION

Portable chest X-ray imaging is a common imaging modality used in intensive care units and emergency rooms, for example. Usually, the imaging is performed with portable systems and with an anterior-posterior view on sick patients leading to poor image quality. The patients admitted in intensive care units and emergency rooms are often very sick and monitored and managed by various devices and catheters attached to their bodies. The impressions of these devices and catheters, that can be both external and internal devices, appear on the radiograph such that different lines, tubes, and leads may be visible in the resulting X-ray image. As chest X-rays are two-dimensional projection images, depth information is absent in these images. Due to this, external devices and catheters like ECG leads and internal devices and catheters like chest drains, or pacemaker leads cannot be readily differentiated.

These impressions of medical devices in the X-ray image can potentially be problematic during image review, especially if the reviewing physician fails to properly identify said structures while reviewing the image, if he is not managing the patient directly. This can be problematic in case the devices obscure the important region of the organ or structure to be imaged as it can lead to difficulties in review and reporting.

The inventors of the present invention have thus found that it would be advantageous to have an improved method of identifying medical devices in an X-ray image that are attached to a patient and may potentially be impairing the image and diagnosis of the patient.

### SUMMARY OF THE INVENTION

It is an object of the present invention to provide an improved method of determining an impairment of a medical image by a medical device.

The object of the present invention is solved by the subject matter of the independent claims, wherein further embodiments are incorporated in the dependent claims.
The described embodiments similarly pertain to the computer-implemented method of determining an impairment of a medical image by a medical device, the data processing apparatus, the computer program, and the computer-readable storage medium. The embodiments described further may be combined in any possible way. Synergistic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method, unless explicitly mentioned to the contrary hereinafter.

According to a first aspect of the invention, there is provided a computer-implemented method of determining an impairment of a medical image by a medical device. The method comprises the steps of receiving a medical image of a region of interest of a subject, the region of interest comprising at least an anatomical structure and a medical device arranged at the subject, segmenting the medical device in the medical image, and classifying the segmented medical device at least as being a medical device internal or external to the subject. The method comprises further the steps of segmenting the anatomical structure in the medical image, and determining an overlapping region of the medical device with the anatomical structure in the medical image. The method comprises further the steps of classifying the determined overlapping region as impairing the medical image in case the overlapping region obscures at least a part of the anatomical structure that is relevant for diagnosis of the subject based on the medical image and data related to the subject, and providing an indication of the overlapping region classified as impairing the medical image as output of the method.

Thus, a method is proposed to identify devices and catheters in a chest X-ray image and further to characterize them as being extracorporeal or corporeal, i.e. external or internal to a patient. Furthermore, the identified devices and a relevant overlap regions between the device and organs or structures of interest are annotated in the image on demand and the impression of a specific device or multiple devices or classes of devices can be toggled of to improve anatomy visualization. Additionally, for external devices a feedback can be provided to manage placement of these external devices better.

Therefore, after receiving a medical image, different devices and catheters from the input chest x-ray image are segmented out, as well as different thoracic structures and organs. The positioning of the device is identified and it is determined if the device hinders the diagnosis of an important part of the underlying structures or organs or of another device of interest in the X-ray image. Optionally, the radiographer can be provided with an indication about manual position correction of the device in case of an extracorporeal device that hinders important structures or findings. In addition or alternatively, artifact suppression and/or image enhancement methods can be utilized in order to suppress corporeal device and catheter impressions from the input image if they are obscuring thorax structures or lesions. Further, the medical image is presented to the user through a user interface, with an indication of the identified devices and optionally with an enrichment of the image by removing a visualization of the detected device in the image.

Thus, a methodology is proposed to detect overlap of a medical device with an organ or structure that may obscure a region of interest of the image. Further, feedback can be provided to manage the device positioning better, which would ease image review. Optionally, the artifact or impression of the medical device can be removed from the image using image processing methods, in order to provide the physician with an enriched, unimpaired X-ray image.

In an embodiment of the invention, the medical image is an X-ray image, and the region of interest is the chest of the subject.

In an embodiment of the invention, in case the medical device is classified as being a medical device external to the subject, the method comprises further the step of providing guidance to a user of how to reposition the medical device with respect to the subject. Thus, a second image can be acquired from the patient without the positioning of the medical device impairing the image.

In an embodiment of the invention, the method further comprises the step of editing the medical image such that a reproduction of the medical device in the medical image is removed from the medical image, and providing the edited medical image. Thus, the impression of a corporal device that cannot be easily repositioned can be removed from the image using image processing methods in order to provide the radiographer with a high quality image.

In an embodiment of the invention, the method further comprises the step of receiving a selection of at least one medical device whose reproduction in the medical image is to be removed from the medical image.

In an embodiment of the invention, the medical device is an external medical device comprising an ECG lead or an external pipe, or the medical device is an internal medical device comprising a central venous catheter, a peacemaker lead, or a chest drain.

In an embodiment of the invention, the anatomical structure is an organ or at least a part of an organ of the subject.

In an embodiment of the invention, the data related to the subject correspond to a condition of the subject, a diagnosis, and/or treatment information.

In an embodiment of the invention, the data related to the subject are derived from a hospital information system, a clinical database, and/or an organ atlas database.

In an embodiment of the invention, at least one of the steps of the method is performed by a trained artificial intelligence.

In an embodiment of the invention, the method comprises further the step of training an artificial intelligence to perform at least one of the steps of segmenting the medical device in the medical image, classifying the segmented medical device at least as being a medical device internal or external to the subject, and segmenting the anatomical structure in the medical image.

In an embodiment of the invention, the method comprises further the step of determining an overlapping region of the medical device with a second medical device of interest in the medical image. Thus, additionally the overlap of the medical device with another device present in the medical image can be identified, and the impairment of the view onto this device in the image can be removed. According to another aspect of the invention, there is provided a data processing apparatus comprising means for carrying out the steps of the method according to any of the preceding embodiments.

According to another aspect of the invention, there is provided a computer program comprising instructions which, when the program is executed by a computer, cause the computer to carry out the steps of the method according to any of the preceding embodiments.

According to another aspect of the invention, there is provided a computer-readable storage medium comprising instructions which, when executed by a computer, cause the computer to carry out the steps of the method according to any of the preceding embodiments.

In summary, the invention relates to a computer-implemented method of determining an impairment of a medical image by a medical device. The method comprises receiving a medical image of a region of interest of a subject, the region of interest comprising at least an anatomical structure and a medical device arranged at the subject, segmenting the medical device in the medical image, and classifying the segmented medical device at least as being a medical device internal or external to the subject. The method comprises further segmenting the anatomical structure in the medical image, and determining an overlapping region of the medical device with the anatomical structure in the medical image. The method comprises further classifying the determined overlapping region as impairing the medical image in case the overlapping region obscures at least a part of the anatomical structure that is relevant for diagnosis of the subject based on the medical image and data related to the subject, and providing an indication of the overlapping region classified as impairing the medical image as output of the method.

One of the advantages of embodiments of the present invention may be that devices and catheters obscuring important chest X-ray features and lesions can be identified. Another advantage may reside in that ambiguity in identification of devices and catheters seen in a chest X-ray can be resolved. Another advantage may be that a feedback system is provided to manage both external and internal device placement better, and that artifacts in the image due to medical device placement can be removed. The proposed method can favorably be used as quality check during digital X-ray imaging at intensive care units and emergency rooms with respect to external and internal device positioning.

These advantages are non-limiting and other advantages may be envisioned within the context of the present application.

The above aspects and embodiments will become apparent from and be elucidated with reference to the exemplary embodiments described hereinafter. Exemplary embodiments of the invention will be described in the following with reference to the following drawings:

### BRIEF DESCRIPTION OF THE DRAWINGS

Fig. 1 shows a block diagram of a computer-implemented method of determining an impairment of a medical image by a medical device according to an embodiment of the invention.
Fig. 2 shows an illustration of the step of segmenting the medical device in the medical image using a trained artificial intelligence according to an embodiment of the invention.
Fig. 3 shows an illustration of the step of segmenting the anatomical structure in the medical image using a trained artificial intelligence according to an embodiment of the invention.
Fig. 4 shows an example of a patient's chest X-ray image with Ground Glass Opacity in the lung periphery and external ECG leads obscuring part of the lung periphery.

### DETAILED DESCRIPTION OF EMBODIMENTS

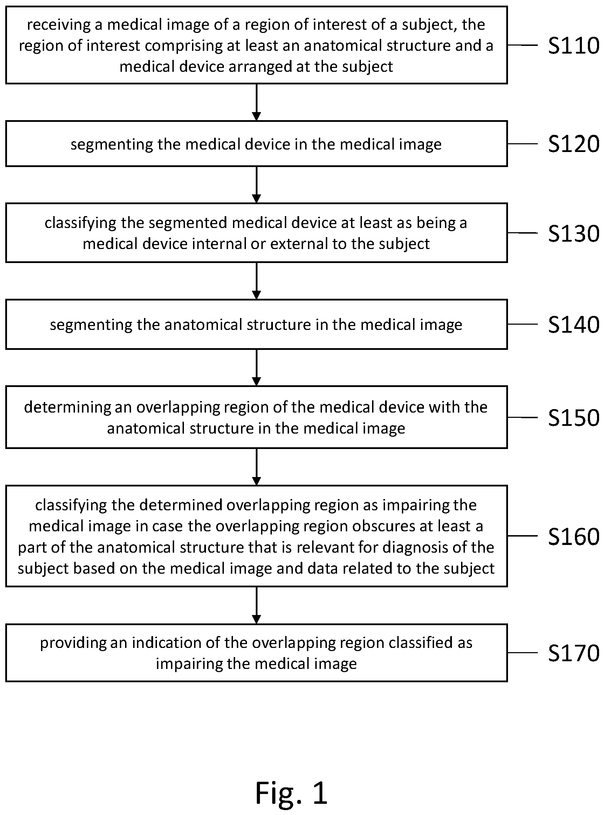

Fig. 1 shows a block diagram of a computer-implemented method of determining an impairment of a medical image 110 by a medical device 120 according to an embodiment of the invention. The method comprises step S 110 of receiving a medical image 110 of a region of interest of a subject 130, the region of interest comprising at least an anatomical structure 140 and a medical device 120 arranged at the subject, step S120 of segmenting the medical device 120 in the medical image 110, and step S130 of classifying the segmented medical device 120 at least as being a medical device internal or external to the subject 130. The method comprises further step S140 of segmenting the anatomical structure 140 in the medical image 110, and step S150 of determining an overlapping region of the medical device 120 with the anatomical structure 140 in the medical image 110. The method comprises further step S160 of classifying the determined overlapping region as impairing the medical image 110 in case the overlapping region obscures at least a part of the anatomical structure 140 that is relevant for diagnosis of the subject 130 based on the medical image 110 and data related to the subject 130, and step S170 of providing an indication of the overlapping region classified as impairing the medical image 110 as output of the method.

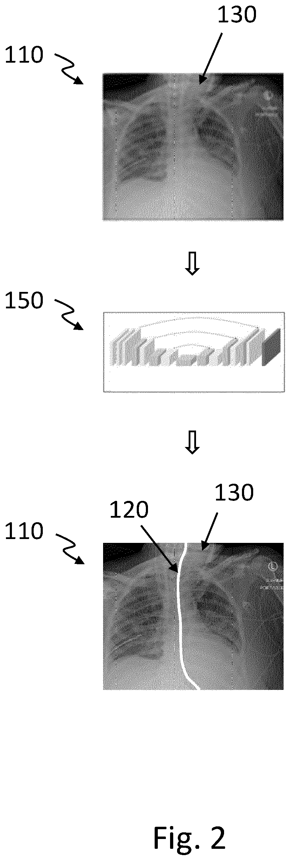

Fig. 2 shows an illustration of the step of segmenting the medical device 120 in the medical image 110 using a trained artificial intelligence 150 according to an embodiment of the invention. This step S120 of the proposed method is to segment the devices and catheters visible in the medical images 110 of a subject 130 and then classify them as internal devices or external devices in step S130. To achieve this, a deep learning based segmentation and classification model is developed, the architecture of which being exemplarily illustrated in Figure 2. X-ray images containing at least one of different external and internal devices and catheters, for example, are annotated to train the above-mentioned deep learning model for the segmentation and classification task. The model takes an unseen image and segments the devices/catheters within the image and also classifies the segmented devices as being extracorporeal or corporeal. The model may also classify the devices or catheters into more specific subclasses. Thus, preferably, in step S130, the at least one medical device 120 detected and segmented in the medical image 110 is classified not only as being either an internal device or an external device. In addition to that, it can be classified as being a central venous catheter, a nasogastric tube, or an endotracheal tube in case of an internal device, and it can be classified as electrocardiogram leads or external pipes in case of an external device, for example.

An alternative approach to differentiate and classify between external and internal devices could be training a model using prospective images, if available, to segment and classify external devices from all the devices detected and segmented from the x-ray image. Another alternative training approach could be to acquire radiographs of the medical device only and overlay it onto X-ray images without any medical device visible. This would be accurate for extracorporeal devices and form a strong augmentation probability as device overlays can be shifted, rotated, etc. across the medical image. In another embodiment, the segmentation results can be post-processed by a tracking method, e.g. as known from vessel tracing, in order to separate tubes, leads, and wires of different devices. This helps to identify unique devices and potentially propose a way to reposition them for better image quality with less occlusion.

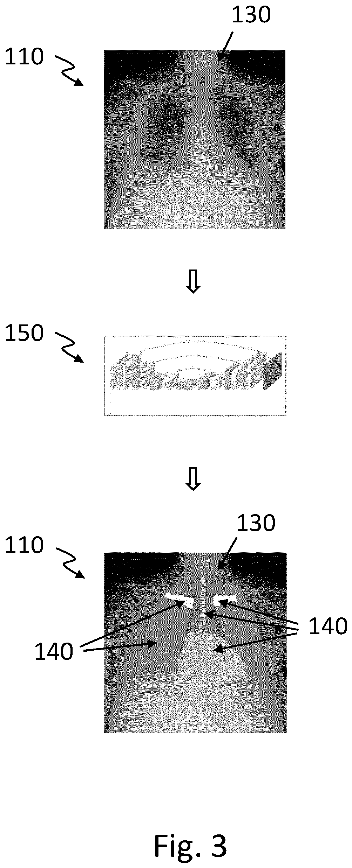

Fig. 3 shows an illustration of the step of segmenting the anatomical structure 140 in the medical image 110 using a trained artificial intelligence 150 according to an embodiment of the invention. It is important to segment the underlying anatomical structures 140 and organs in the x-ray image of the subject 130 to detect the overlap between them and the devices. A deep learning based segmentation model is trained to detect and segment the structures and organs that may overlap with different external or internal devices and obscure the region of interest during image review.

In order to assess device and catheter position with respect to the underlying structure, overlapping regions between the medical device 120 and underlying anatomical structures 140 and/or organs are detected and segmented in step S150. The external or internal devices and thoracic organs and structures are be segmented using the method/model discussed in the previous sections. The overlap of the devices with organs and structures are detected and quantified based on the segmented regions. Once a list of overlap regions is detected, it is important to assess which overlapping regions are important based on the patient condition, diagnosis and treatment information. A hospital information system (HIS) database can be consulted to query and analyse the patient condition, diagnosis, treatment related data and natural language processing (NLP) technique can be applied to extract insights. Next, the patient diagnosis and treatment information can be used to find the relevant device-organ overlaps which can obscure the region of interest. A clinical database and/or an organ atlas database can be consulted to map the patient diagnosis and treatment information to relevant thoracic organs or structures. This mapping may also include organ sub regions of interest like superior, middle or inferior lobes of the lung, for example. The proposed method can also detect overlaps among different devices and identify if part of one device obscures another device of interest, as ECG lead wires may obscure parts of a catheter, for example.

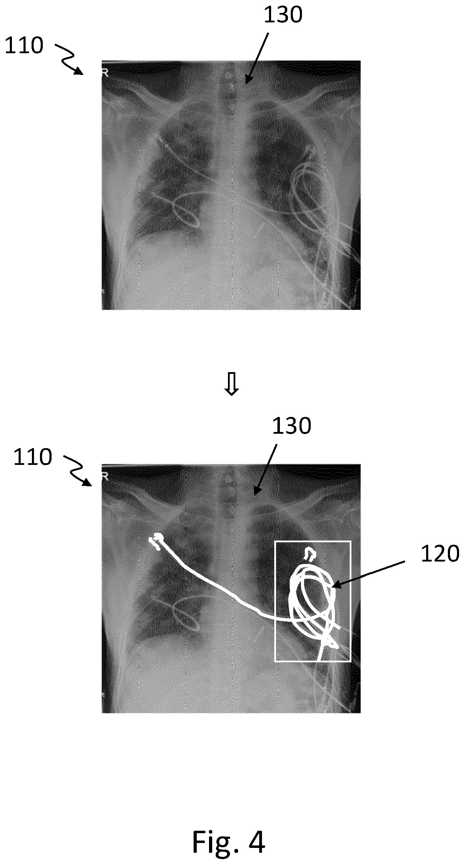

Fig. 4 shows an example of a patient's chest X-ray image with Ground Glass Opacity in the lung periphery and external ECG leads obscuring part of the lung periphery. The proposed method detected and segmented this overlapping region and provided feedback to a user. Once the relevant overlapping regions are identified, it is important to indicate the findings to the radiographer or the physician and provide feedback to correct the overlap.

In case of overlapping corporeal or internal devices the user will be alerted as feedback. It often may not be possible to reposition the internal devices. An artifact suppressor or image enhancer method can be invoked to suppress on demand corporeal device and catheter impressions from the input image if it is obscuring important regions of the thorax structure or lesions, for example.

In case of an external device that obscures structures or organs or a section of an important internal device, then the proposed invention may indicate an alert to the user and also provide feedback of re-positioning the external device at the patient or subject 130. If device re-positioning is not possible then the artifact suppressor or image enhancer method can be invoked to suppress the impression of the device. In Figure 4, such an example is shown, where an X-ray is taken to understand disease progression in a patient, who was diagnosed and reported from a previous scan having Ground Glass Opacification (GGO) in lung periphery. In this medical image 110 of Fig. 4, ECG lead wires are obscuring the left lung peripheral region which is the region of interest for diagnosing the disease progression. In such a scenario, the proposed method can indicate about the positioning error of the external device and give feedback to correct the positioning of the ECG lead wires.

Preferably, the radiographer, reviewing physician, or radiologist can be presented with feedback in the following manner. A list of identified devices and catheters obscuring the whole image or a certain diagnostically-relevant region of interest that may be user-defined or defined from analysis of the hospital information system is provided. The devices and catheters can be colored with coded colors with label next to them. Additionally, a list of external devices that can be repositioned can be provided, and an optional toggle button that allows to suppress the impressions of either all devices and catheters, or of specific classes of devices and catheters, or of a specific catheter, which may also be suppressed by directly clicking on the identified structure.

In addition, a system is proposed that is configured to identify devices and catheters in an X-ray image and further to characterize them as being extracorporeal or corporeal. The system comprises a segmentation module to segment out different devices and catheters from the input X-ray image, a segmentation module to segment out different thoracic structures and organs from the X-ray image, and a module to identify if the positioning of the device hinders important part of the underlying structures/organs or of another device of interest. The system further comprises a guiding module to indicate a radiographer about manual position correction in case of an extracorporeal device that hinders important structures or findings, and an artifact suppressor or image enhancer module to suppress corporeal device and catheter impressions from the input image if it is obscuring thorax structure or lesions. Further, a presentation module can be provided to present the enriched image to the user through user interface elements. Thus, obscuring by devices and catheters of important findings in an X-ray image can be prevented.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

### LIST OF REFERENCE SIGNS:

- 110: medical image
- 120: medical device
- 130: subject
- 140: anatomical structure
- 150: artificial intelligence

## Claims

1. A computer-implemented method of determining an impairment of a medical image (110) by a medical device (120), the method comprising the steps of:
receiving (S110) a medical image (110) of a region of interest of a subject (130), the region of interest comprising at least an anatomical structure (140) and a medical device (120) arranged at the subject;
segmenting (S120) the medical device (120) in the medical image (110);
classifying (S130) the segmented medical device (120) at least as being a medical device internal or external to the subject (130);
segmenting (S140) the anatomical structure (140) in the medical image (110);
determining (S150) an overlapping region of the medical device (120) with the anatomical structure (140) in the medical image (110);
classifying (S160) the determined overlapping region as impairing the medical image (110) in case the overlapping region obscures at least a part of the anatomical structure (140) that is relevant for diagnosis of the subject (130) based on the medical image (110) and data related to the subject (130); and
providing (S 170) an indication of the overlapping region classified as impairing the medical image (110) as output of the method.

2. The method according to claim 1, wherein the medical image (110) is an X-ray image, and the region of interest is the chest of the subject (130).

3. The method according to any of claims 1 or 2, wherein, in case the medical device (120) is classified as being a medical device external to the subject, the method comprises further the step of providing guidance to a user of how to reposition the medical device (120) with respect to the subject (130).

4. The method according to any of the preceding claims, wherein the method further comprises the step of editing the medical image (110) such that a reproduction of the medical device (120) in the medical image (110) is removed from the medical image (110), and providing the edited medical image.

5. The method according to claim 4, wherein the method further comprises the step of receiving a selection of at least one medical device (120) whose reproduction in the medical image (110) is to be removed from the medical image.

6. The method according to any of the preceding claims, wherein the medical device (120) is an external medical device comprising an ECG lead or an external pipe, or wherein the medical device (120) is an internal medical device comprising a central venous catheter, a peacemaker lead, or a chest drain.

7. The method according to any of the preceding claims, wherein the anatomical structure (140) is an organ or at least a part of an organ of the subject (130).

8. The method according to any of the preceding claims, wherein the data related to the subject (130) correspond to a condition of the subject (130), a diagnosis, and/or treatment information.

9. The method according to any of the preceding claims, wherein the data related to the subject (130) are derived from a hospital information system, a clinical database, and/or an organ atlas database.

10. The method according to any of the preceding claims, wherein at least one of the steps of the method is performed by a trained artificial intelligence (150).

11. The method according to claim 10, wherein the method comprises further the step of training an artificial intelligence (150) to perform at least one of the steps of segmenting the medical device (120) in the medical image (110), classifying the segmented medical device (120) at least as being a medical device internal or external to the subject (130), and segmenting the anatomical structure (140) in the medical image (110).

12. The method according to any of the preceding claims, wherein the method comprises further the step of determining an overlapping region of the medical device (120) with a second medical device of interest in the medical image (110).

13. A data processing apparatus (100) comprising means for carrying out the steps of the method according to any of claims 1 to 12.

14. A computer program comprising instructions which, when the program is executed by a computer, cause the computer to carry out the steps of the method according to any of claims 1 to 12.

15. A computer-readable storage medium comprising instructions which, when executed by a computer, cause the computer to carry out the steps of the method according to any of claims 1 to 12.
